(19) Europäisches Patentamt / European Patent Office / Office européen des brevets

(11) **EP 2 613 581 A1**

(12) **EUROPEAN PATENT APPLICATION**
published in accordance with Art. 153(4) EPC

(43) Date of publication:
**10.07.2013 Bulletin 2013/28**

(21) Application number: **11786136.9**

(22) Date of filing: **03.06.2011**

(51) Int Cl.:
*H04W 12/02* (2009.01)

(86) International application number:
**PCT/CN2011/075347**

(87) International publication number:
**WO 2011/147364 (01.12.2011 Gazette 2011/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2010 CN 201010268963**

(71) Applicant: **Huawei Technologies Co., Ltd.
Shenzhen, Guangdong 518129 (CN)**

(72) Inventors:
• **XIAO, Zhiyu
Shenzhen
Guangdong 518129 (CN)**
• **YU, Jiang
Shenzhen
Guangdong 518129 (CN)**

(74) Representative: **Körber, Martin Hans
Mitscherlich & Partner
Sonnenstraße 33
80331 München (DE)**

(54) **USER IDENTITY INFORMATION TRANSMISSION METHOD, AND USER EQUIPMENT, WEB SIDE EQUIPMENT AND SYSTEM**

(57)     A method and a system for transmitting subscriber identity information, and a network device are provided. The method includes: receiving a subscriber identity request message from a Mobility Management Entity (MME); encrypting an International Mobile Subscriber Identity (IMSI) of a User Equipment (UE) to generate a cipher text; and sending a subscriber identity response message that includes the cipher text of the IMSI to the MME. The method and the system for transmitting subscriber identity information, and the network device adopts the technical means that, the IMSI of the UE is encrypted to generate a cipher text which is fed back to the network device, thereby overcoming the problem in the current subscriber identity authentication mechanism that the IMSI of the UE is very easily resolved, so that the technical effect of transmitting the subscriber identity confidentially is improved.

FIG. 2

EP 2 613 581 A1

## Description

This application claims priority to Chinese Patent Application No. 201010268963.1, filed with the Chinese Patent Office on September 01, 2010 and entitled "METHOD AND SYSTEM FOR TRANSMITTING SUBSCRIBER IDENTITY INFORMATION, USER EQUIPMENT, NETWORK DEVICE", which is hereby incorporated by reference in its entirety.

## FIELD OF THE INVENTION

The present invention relates to the field of wireless communications, and in particular, to a method and a system for transmitting subscriber identity information, a User Equipment (UE), and a network device.

## BACKGROUND OF THE INVENTION

The Third Generation Partnership Project (3GPP) is developing a brand-new evolved network architecture to meet application requirements of future mobile networks, including System Architecture Evolvement (SAE) and Long Term Evolution (LTE) of an access network. Network evolution aims to provide a fully IP-based network characterized by low delay, high data rate, high system capacity, wide coverage, and low cost.

The LTE Radio Access Network (RAN) employs Orthogonal Frequency Division Multiplexing (OFDM) technology and Multiple Input Multiple Output (MIMO) technology, and supports Frequency Division Duplex (FDD) and Time Division Duplex (TDD). The LTE is informally called 3.9G wireless communication system.

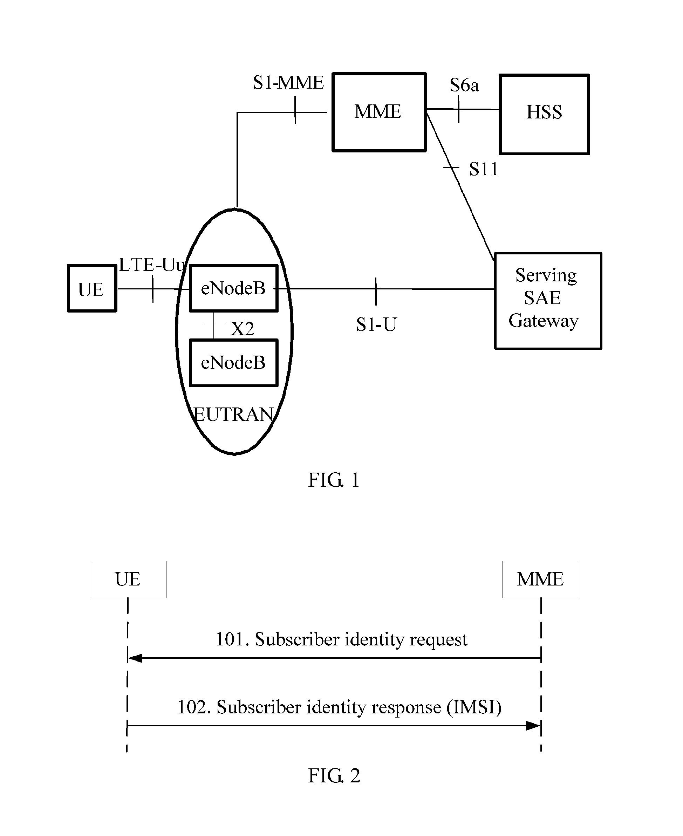

FIG. 1 is a schematic diagram of an evolved network architecture in the prior art. This network architecture includes a UE, an Evolved UMTS Terrestrial Radio Access Network (E-UTRAN), and an Evolved Packet Core (EPC). The E-UTRAN is composed of Evolved NodeBs (eNodeBs) which are interconnected through X2 interfaces. The UE is connected to an eNodeB through an LTE-Uu interface. The EPC includes a Mobility Management Entity (MME), a serving SAE gateway, and so on. The MME is responsible for control-plane mobility management, for example, management on user contexts and mobility state, and allocation of temporary identifiers of users. The MME is connected to the E-UTRAN through an S1-MME interface, and connected to the serving SAE gateway through an S1-U interface. The system shown in FIG. 2 further includes a Home Subscriber Server (HSS), which is connected to the MME through an S6a interface.

In the existing network security mechanism, the MME generally needs to identify the subscriber identity of the UE. When the MME is unable to identify the Mobile Equipment (ME) or UMTS Subscriber Identity Module (USIM) of the UE through a Globally Unique Temporary ID (GUTI), or, if the MME discovers an unknown accessing user, the MME initiates a procedure of requesting the identity information of the user. Generally, the MME requests the subscriber identity in order to obtain International Mobile Subscriber Identity (IMSI) of the UE. The IMSI generally identifies a UE uniquely, and identifies a subscriber independently.

In the process of developing the present invention, the inventor finds that when the MME initiates a procedure of requesting the subscriber identity information in the prior art, the IMSI is carried in a message corresponding to the subscriber identity, where the message is fed back by the UE to the MME, and the IMSI exists in the form of plain texts. Therefore, the IMSI of the subscriber is easy to be resolved, and scarcely secure. The low security brings ill consequences. For example, once a malicious hacker knows the IMSI of the UE, the malicious hacker can perform invalid operations such as tracking on the user of the UE.

## SUMMARY OF THE INVENTION

The embodiments of the present invention aim to solve the problem in the current subscriber identity authentication mechanism that the IMSI of the UE is very easily resolved so that low security is caused.

An embodiment of the present invention provides a method for transmitting subscriber identity information. The method includes: receiving a subscriber identity request message from an MME; encrypting an IMSI of a UE to generate a cipher text; and sending a subscriber identity response message including the cipher text of the IMSI to the MME.

An embodiment of the present invention provides a UE. The UE includes:

a first receiving unit, configured to receive a subscriber identity request message from an MME; a first processing unit, configured to encrypt an IMSI of a UE to generate a cipher text of the IMSI of the UE after the first receiving unit receives the subscriber identity request message from a network device; and a first sending unit, configured to send a subscriber identity response message including the cipher text of the IMSI generated by the first processing unit to the MME.

An embodiment of the present invention provides another method for transmitting subscriber identity information. The method includes:

sending a subscriber identity request message to a UE; receiving a subscriber identity response message from the UE, where the subscriber identity response message includes a cipher text of the IMSI of the UE; and decrypting the cipher text of the IMSI of the UE to obtain the IMSI of the UE.

An embodiment of the present invention provides a network device. The network device includes:

a second sending unit, configured to send a subscriber identity request message to a UE; a second receiving unit, configured to receive a subscriber identity response message from the UE, where the subscriber identity response message includes a cipher text of the IMSI of the UE; and a second processing unit, configured to decrypt the cipher text of the IMSI of the UE to obtain the IMSI of the UE.

An embodiment of the present invention provides another network device. The network device includes:

a third receiving unit, configured to receive a subscriber identity response message of a UE forwarded by an MME, where the subscriber identity response message includes a cipher text of the IMSI of the UE; a third processing unit, configured to decrypt the cipher text of the IMSI of the UE received by the third receiving unit to obtain the IMSI of the UE, and encrypt the IMSI of the UE to generate a cipher text of the IMSI of the UE by using an MME public key and an HSS private key which are obtained beforehand; and a third sending unit, configured to send the cipher text of the IMSI of the UE generated by the third processing unit to the MME.

An embodiment of the present invention provides a system for transmitting subscriber identity information. The system includes:

any UE according to the foregoing embodiments of the present invention, and/or any
network device according to the foregoing embodiments of the present invention.

By implementing the technical solutions according to the foregoing embodiments of the present invention, the problem in the current subscriber identity authentication mechanism that the IMSI of the UE is very easily resolved is overcome, so that the technical effect of improving security of the subscriber identity authentication mechanism is achieved.

**BRIEF DESCRIPTION OF THE DRAWINGS**

The drawings listed below enable further understanding of the embodiments of the present invention, and are part of this application but shall not be construed as limitation on the present invention.

FIG. 1 is a schematic diagram of an evolved network architecture in the prior art;
FIG. 2 is a schematic flowchart of how an MME requests subscriber identity of a UE in the prior art;
FIG. 3 is a schematic structure diagram of a UE according to an embodiment of the present invention;
FIG. 4 is a schematic structure diagram of another UE according to an embodiment of the present invention;
FIG. 5 is a schematic diagram of a method for transmitting subscriber identity information according to an embodiment of the present invention;
FIG. 6 is a schematic diagram of a network device according to an embodiment of the present invention;
FIG. 7 is a schematic diagram of a network device according to an embodiment of the present invention;
FIG. 8 is a schematic flowchart of a method for transmitting subscriber identity information according to an embodiment of the present invention;
FIG. 9 is a schematic diagram of a network device according to an embodiment of the present invention;
FIG. 10 is a schematic diagram of a network device according to an embodiment of the present invention;
FIG. 11 is a schematic diagram of a network device according to an embodiment of the present invention;
FIG. 12 is a schematic flowchart of a method for transmitting subscriber identity information according to an embodiment of the present invention;
FIG. 13 is a schematic diagram of a communication system for transmitting subscriber identity information according to an embodiment of the present invention; and
FIG. 14 is a schematic diagram of a method example of transmitting subscriber identity information according to an embodiment of the present invention.

**DETAILED DESCRIPTION OF THE EMBODIMENTS**

FIG. 2 is a schematic flowchart of how an MME requests subscriber identity of a UE in the prior art. The procedure of the flowchart includes the following steps:

Step 101: The MME sends an Identity Request message to the UE, to obtain the IMSI of the UE.
Step 102: The UE receives the Identity Request message sent from the MME, and feeds back an Identity Response message that includes the IMSI of the UE to the MME.

To facilitate understanding the embodiments of the present invention, two encryption algorithms involved in the embodiments of the present invention are introduced, namely, a symmetric encryption algorithm and an asymmetric encryption algorithm.
The symmetric encryption algorithm is an algorithm in which an encryption key can be inferred from a decryption key, and vice versa. In most symmetric encryption algorithms, the encryption key is the same as the decryption key. Such algorithms are also known as secret key algorithms or single key algorithms, which require the sender and the receiver to agree on a key before secure communication. Security of symmetric algorithms depends on the key, and leak of the key means that anyone can encrypt and decrypt messages.

Asymmetric encryption algorithms are also known as public key algorithms, and generally require two keys: an encryption key and a decryption key. The encryption key is also known as a public key, and the decryption key is also known as a private key. The public key and the private key come in pairs. If data is encrypted through a public key, the data cannot be decrypted without the corresponding private key; if data is encrypted through a private key, the data cannot be decrypted without the corresponding public key. Because the key for encrypting is different from the key for decrypting, the algorithm is called the asymmetric encryption algorithm. Generally, in a presumed reasonable time length, the decryption key cannot be calculated according to the encryption key. As its name implies, the encryption key of the public key algorithm is public, namely, available to strangers for encrypting information with the encryption key, but the information cannot be decrypted without the corresponding decryption key.

Based on the background of the present invention, to make the objectives, the technical solutions, and the beneficial effects of the embodiments of the present invention clearer, the following describes the embodiments of the present invention in more detail with reference to accompanying drawings. The exemplary embodiments of the present invention and the description thereof are illustrative for understanding and explaining the present invention, and shall not be construed as limitation on the present invention.

**Embodiment 1**

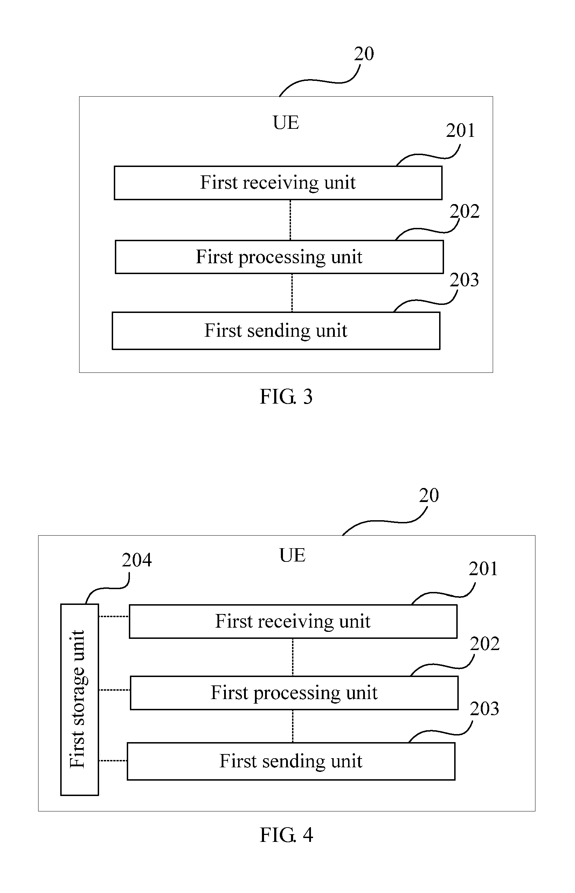

In an aspect of the embodiment of the present invention, FIG. 3 shows a schematic structure diagram of a UE. The UE 20 includes: a first receiving unit 201, configured to receive a subscriber identity request message from a network device such as MME, where the subscriber identity request message may be expressed as Identity Request message, and one objective of the subscriber identity request message is to obtain the IMSI of the UE; a first processing unit 202, configured to encrypt the IMSI of the UE to generate a cipher text of the IMSI of the UE; and a first sending unit 203, configured to send a subscriber identity response message including the cipher text of the IMSI generated by the first processing unit 202 through encryption to the network device.

By reference to the UE shown in FIG. 3, FIG. 4 is a schematic structure diagram of another UE 20 according to an embodiment of the present invention. The UE 20 includes a first receiving unit 201, a first processing unit 202, and a first sending unit 203, and further includes a first storage unit 204, configured to store a key set {ki} (i is a positive integer sequence) before the first receiving unit receives the subscriber identity request message from the network device such as MME. The key set {ki} may be a subset of a permanent key set {K} stored in the network device. For example, {ki} may be a subset of a permanent key set {K} stored in the network-side HSS, or a subset of a permanent key set {K} stored in the network-side MME. The key set {ki} may be customized in the UE according to the requirements of the mobile communication user, for example, stored in the first storage unit 204; the key set {ki} may be obtained at proper time according to the requirements of the mobile communication user, and stored in the first storage unit 204 of the UE; the key set {ki} may also be updated according to the use requirements of the mobile communication user. Generally, greater value of i in the key set {ki} means greater key set customized by the user, and it is more likely that every key in use is different at the time of selecting the key randomly, which improves security of the system.

By reference to the UE shown in FIG. 3 or FIG. 4, the first processing unit 202 is further configured to generate a random number R2, and randomly select a key ki corresponding to the positive integer i, where the key ki belongs to the range of the permanent key set {K} stored in the HSS or MME. The first processing unit 202 uses the random number R2 and the key Ki to perform symmetric key encryption for the IMSI of the UE, for example, express the IMSI as E2(ki, IMSI, R2). The first sending unit 203 is further configured to send a subscriber identity response message that includes a cipher text of the IMSI of the UE, where the subscriber identity response message may be expressed as Identity Response E2(ki, IMSI, R2). The random number R2 and the positive integer i, which are provided to the network device for decrypting the cipher text, may be included in the subscriber identity response message, or may be included in other response messages or specific messages to be sent to the network device.

An application scenario is: The first sending unit 203 sends the message that includes the cipher text of the IMSI of the UE, the random number R2, and the positive integer i, which may be expressed as Identity Response E2(ki, IMSI, R2), R2, i, ...), to the network device such as MME, and the MME decides the next step of processing.

After receiving the message, the MME may forward the message (E2(ki, IMSI, R2), R2, i, ...) to the HSS. After receiving the message, the HSS finds ki in the permanent key set {K} stored in the HSS according to i, decrypts the IMSI of the UE, and encrypts the IMSI by using the KMme-pub and KHSS-pri obtained beforehand, thereby forming cipher text E1 (IMSI, KMme-pub, KHSS-pri). The HSS sends the cipher text E1 (IMSI, KMme-pub, KHSS-pri) to the MME, and the MME uses the KMme-pri and KHSS-pub obtained beforehand to calculate the E1 and obtain the IMSI of the UE. The (KHSS-pub, KHSS-pri) may be an expression of an asymmetric key pair generated by the HSS, and the (KMme-pub, KMme-pri) may be an expression of an asymmetric key pair generated by the MME.

It is easy to generate an asymmetric key pair on the MME or HSS. A generally used public key algorithm such as Rivest Shamir Adleman (RSA) in the prior art may be selected for obtaining (Kpub, Kpri).

In another application scenario, the MME may also have the functions of the HSS according to this embodiment. That is, {ki} is a subset of a permanent key set {K} stored on the network-side MME. The MME may find the key ki in the permanent key set {K} stored in the MME according to the random number R2 and the i, and decrypt the IMSI of the UE.

In the UE according to the embodiment of the present invention, the functions of the first receiving unit 201, the first processing unit 202, the sending unit 203, and the storage unit 204 may be implemented through stand-alone physical modules or logical modules in the UE, and all or part of the modules may be combined into one physical entity or logical entity, for example, combined into an ME/USIM in the UE.

The UE embodiment of the present invention adopts the technical means that, the IMSI of the UE is encrypted to generate a cipher text which is fed back to the network device, thereby overcoming the problem in the current subscriber identity authentication mechanism that the IMSI of the UE is very easily resolved, so that the technical effect of improving the subscriber identity confidentiality is achieved.

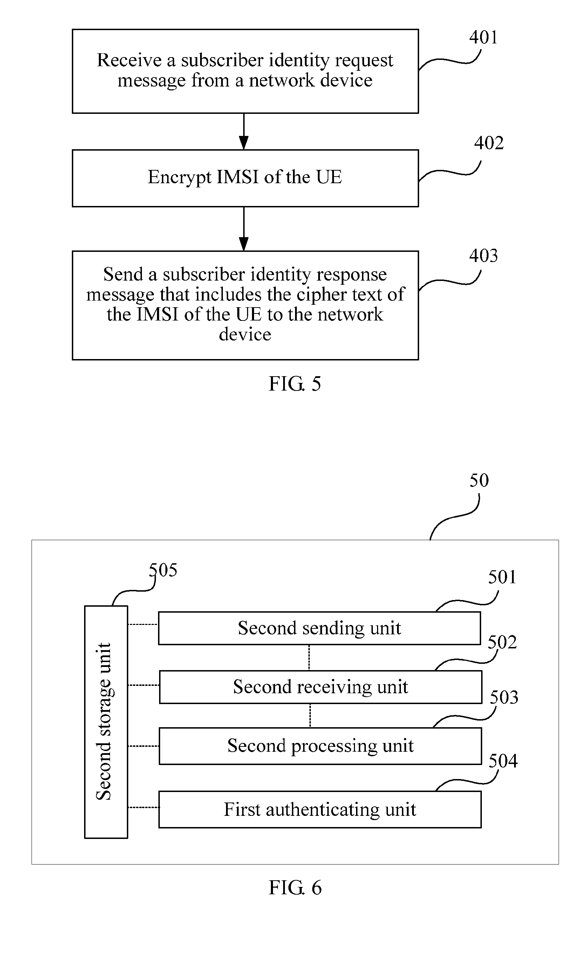

In another aspect of the embodiment of the present invention, by reference to the UE according to the embodiment of the present invention, corresponding to the UE, a method for transmitting subscriber identity information is provided in an embodiment of the present invention. As shown in FIG. 5, the method includes the following steps:

Step 401: Receive a subscriber identity request message from a network device.

An expression of the subscriber identity request message is Identity Request message. Before step 401, the method for transmitting the subscriber identity information may further include: storing the key set {ki}, in which i is a positive integer sequence, and the key set {ki} may be a subset of the permanent key set {K} stored in the network-side HSS or MME. The key set {ki} may be customized in the UE according to the requirements of the mobile communication user; the key set {ki} may be obtained at proper time according to the requirements of the mobile communication user, and stored in the UE; the key set {ki} may also be updated according to the use requirements of the mobile communication user. Generally, greater value of i in the key set {ki} means greater key set customized by the user, and it is more likely that every key in use is different at the time of selecting the key randomly, which improves security of the system.

Step 402: Encrypt the IMSI of the UE to generate a cipher text of the IMSI.

In this step, an applicable encryption mode is: generating a random number R2, and randomly selecting a key ki corresponding to the positive integer i (the key ki may belong to a subset of the permanent key set {K} stored in the HSS or MME); and using the random number R2 and the key Ki to perform symmetric key encryption for the IMSI of the UE, that is, encrypt the IMSI of the UE to form a cipher text expressed as E2(ki, IMSI, R2) for example.

Step 403: Send a subscriber identity response message that includes the cipher text of the IMSI of the UE to the network device.

The subscriber identity response message may be expressed as Identity Response E2(ki, IMSI, R2). The subscriber identity response message may include a random number R2 and a positive integer sequence i, which are used by the network device for decrypting the cipher text. The random number R2 and the positive integer sequence i for decrypting the cipher text may also be included in other response messages or specific messages to be sent to the network device.

An application scenario is: the message that includes the cipher text of the IMSI of the UE, the random number R2, and the positive integer i, which may be expressed as Identity Response E2(ki, IMSI, R2), R2, i, ...), is sent to the network device such as MME, and the MME decides the next step of processing.

After receiving the message, the MME may forward the message (E2(ki, IMSI, R2), R2, i, ...) to the HSS. After receiving the message, the HSS finds ki in the permanent key set {K} stored in the HSS according to i, decrypts the IMSI of the UE, and encrypts the IMSI by using the KMme-pub and KHSS-pri obtained beforehand, thereby forming cipher text E1 (IMSI, KMme-pub, KHSS-pri). The HSS sends the cipher text E1 (IMSI, KMme-pub, KHSS-pri) to the MME, and the MME uses the KMme-pri and KHSS-pub obtained beforehand to calculate the E1 and obtain the IMSI of the UE. The (KHSS-pub, KHSS-pri) may be an expression of an asymmetric key pair generated by the HSS, and the (KMme-pub, KMme-pri) may be an expression of an asymmetric key pair generated by the MME.

It is easy to generate an asymmetric key pair on the MME and the HSS. A generally used public key algorithm such as RSA algorithm in the prior art may be selected for obtaining (Kpub, Kpri). In another application scenario, the MME may also have the functions of the HSS according to this embodiment. That is, {ki} is a subset of a permanent key set {K} stored on the network-side MME. The MME may find the key ki in the permanent key set {K} stored in the MME according to the random number R2 and the i, and decrypt the IMSI of the UE.

The embodiment of the present invention adopts the technical means that, the IMSI of the UE is encrypted to generate a cipher text which is fed back to the network device, so that the problem in the current subscriber identity authentication mechanism that the IMSI of the UE is very easily resolved is overcome, and the technical effect of improving the subscriber identity confidentiality is achieved.

Embodiment 2

By reference to the implementation of the UE according to the embodiment of the present invention, correspondingly, a network device 50 is provided in an embodiment of the present invention. FIG. 6 is a schematic diagram of a network device according to an embodiment of the present invention. As shown in FIG. 6, the network device 50 includes a second sending unit 501, a second receiving unit 502, and a second processing unit 503.

The second sending unit 501 is configured to send a subscriber identity request message to the UE. One objective of sending the subscriber identity request message is to obtain the IMSI of the UE.

The second receiving unit 502 is configured to receive a subscriber identity response message from the UE. After receiving the subscriber identity request message sent by the second sending unit 501, the UE feeds back a subscriber identity response message to the network device 50, where the subscriber identity response message includes the cipher text of the IMSI of the UE. The cipher text of the IMSI of the UE may be obtained by the UE through symmetric key encryption (see also the procedure of how the UE encrypts the IMSI in embodiment 1). By generating a random number R2 and randomly selecting a positive integer sequence i, the UE obtains a corresponding permanent key ki from the key set {ki}, and performs symmetric key encryption for the IMSI of the UE. The key set {ki} may be a subset of a permanent key set {K} stored in the network device. For example, {ki} may be a subset of a permanent key set {K} stored in the network-side HSS, or a subset of a permanent key set {K} stored in the network-side MME.

The subscriber identity response message may be expressed as Identity Response E2(ki, IMSI, R2). The random number R2 and the positive integer i provided to the network device for decrypting the cipher text of the IMSI of the UE may be included in the subscriber identity response message, or may be included in other response messages or specific messages to be sent to the network device. The network device for decrypting the cipher text of the IMSI of the UE may be an HSS or the network device 50 itself such as MME. That is, after the MME receives the subscriber identity response message fed back by the UE, the second processing unit 503 may use the R2 and the i in the subscriber identity response message to decrypt the cipher text of the IMSI of the UE and obtain the IMSI of the UE.

The second sending unit 501 is further configured to forward the subscriber identity response message to the HSS, where the subscriber identity response message is received by the second receiving unit 502 from the UE.

The second receiving unit 502 is further configured to receive the encrypted IMSI of the UE from the HSS.

The second processing unit 503 is configured to decrypt the cipher text of the IMSI of the UE to obtain the IMSI of the UE, where the cipher text of the IMSI is received by the second receiving unit from the HSS. In the implementation of the existing network, the network device 50 may be an MME, and accordingly, the second processing unit 503 performs the decryption in the following way: The second processing unit 503 decrypts the cipher text according to the previously obtained MME private key and HSS public key to obtain the IMSI of the UE.

The network device 50 further includes a first authenticating unit 504 and a second storage unit 505. The first authenticating unit 504 is configured to make the network device 50 be authenticated by other devices (such as HSS) on the network side before the second sending unit 501 sends the subscriber identity request message to the UE.

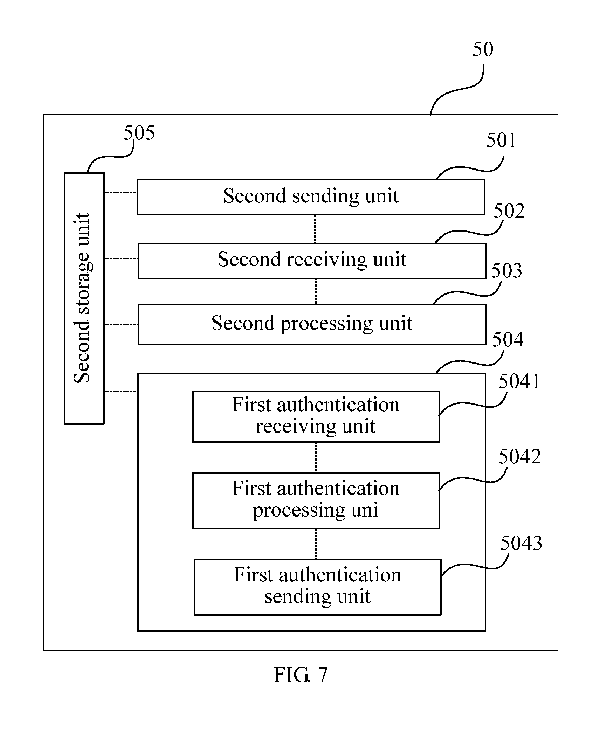

Based on the network device 50 shown in FIG. 6, in an embodiment of the network device 50, as shown in FIG. 7, the first authenticating unit 504 may further include a first authentication receiving unit 5041, a first authentication processing unit 5042, and a first authentication sending unit 5043.

The authentication receiving unit 5041 is configured to receive an authentication request message from the HSS. The authentication request message includes an HSS public key and a random number R1. The received HSS public key and/or random number R1 may be stored in the second storage unit 505.

The first authentication processing unit 5042 is configured to generate an asymmetric key pair after the first authentication receiving unit 5041 receives the authentication request message from the HSS. For example, when the network device 50 is an MME, an MME public key and an MME private key are generated. The first authentication processing unit 5042 generates a cipher text of an MME identifier (MMEI) by using the HSS public key and the random number R1, and the MMEI of the MME, where the HSS public key and the random number R1 are received by the first authentication receiving unit 5041. The MME public key and the MME private key, which are generated by the first authentication processing unit 5042, may be stored in the second storage unit 505.

The first authentication sending unit 5043 is configured to send the cipher text of the MMEI and the MME public key to the HSS.

The functional modules of the network device 50 according to the embodiment of the present invention may be stand-alone physical modules or logical modules in the network device 50, and all or part of the modules may be combined into one physical entity or logical entity; the functions of the submodules in the first authenticating unit 504 (for example, the first authentication receiving unit 5041, the first authentication processing unit 5042, and the first authentication sending unit 5043) may be implemented by the second receiving unit 502, the second sending unit 501, and the second processing unit 502 in the network device 50. For example, the functions of the first authentication receiving unit 5041 may be implemented by the second receiving unit 502, and the functions of the first authentication sending unit 5043 may be implemented by the second sending unit 501, and the rest may be deduced by analogy.

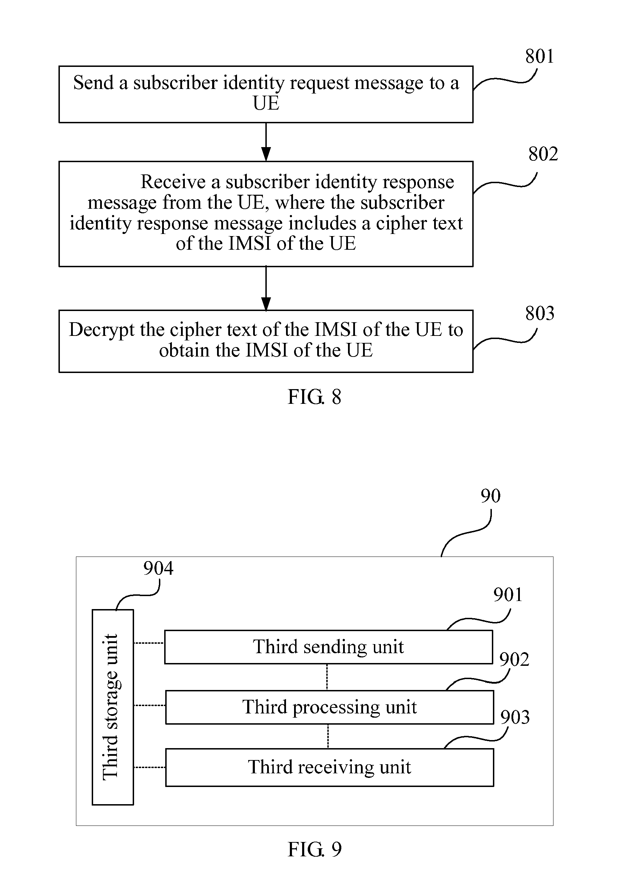

In another aspect of the embodiment of the present invention, by reference to the implementation of the network device 50 according to the embodiment of the present invention, corresponding to the network device 50, a method for transmitting subscriber identity information is provided in an embodiment of the present invention. As shown in FIG. 8, the method includes the following steps:

Step 801: Send a subscriber identity request message to a UE.

One objective of sending the subscriber identity request message is to obtain the IMSI of the UE. Before sending the subscriber identity request message to the UE, the network device such as MME may be authenticated by other network devices such as HSS first, so as to further enhance security of transmitting the subscriber identity information. A method of an MME being authenticated by an HSS is: An MME receives an authentication request message from the HSS, where the authentication request message includes an HSS public key and a random number R1 which are preset; after receiving the authentication request message, the MME stores the HSS public key and generates an asymmetric key pair: an MME public key and an MME private key, then generates a cipher text of the MMEI by using the HSS public key, the random number R1, and the MMEI of the MME, and sends the cipher text of encrypting the MMEI and the MME public key to the HSS. For detailed implementation of the MME, see the implementation mode of the network device 50 according to the embodiment of the present invention.

Step 802: Receive a subscriber identity response message from the UE, where the subscriber identity response message includes a cipher text of the IMSI of the UE.

The received cipher text of the IMSI of the UE may be obtained by the UE through symmetric key encryption. The UE obtains the corresponding permanent key ki by generating a random number R2 and randomly selecting a positive integer sequence i, and performs symmetric key encryption for the IMSI of the UE. The permanent key set {ki} stored in the UE is a subset of a permanent key set {K} of the HSS, where i is a positive integer sequence. The permanent key set {ki} stored in the UE may be a subset of the key set {K} stored in the MME. The received subscriber identity response message of the UE further includes the random number R2 and the positive integer sequence i for decrypting the cipher text.

Step 803: Decrypt the cipher text of the IMSI of the UE to obtain the IMSI of the UE.

An implementation mode is: The permanent key set {ki} stored in the UE is a subset of the key set {K} stored in the MME. The network device decrypts the cipher text of the IMSI of the UE to obtain the IMSI of the UE. If the network device is an MME, after the MME receives the subscriber identity response message fed back by the UE, the MME uses the R2 and the i in the subscriber identity response message to decrypt the cipher text of the IMSI of the UE and obtain the IMSI of the UE.

An implementation mode is: The permanent key set {ki} stored in the UE is a subset of the key set {K} stored in the HSS. Before decrypting and obtaining the IMSI of the UE, the network device such as MME may forward the subscriber identity response message from the UE to the HSS. After receiving the message, the HSS finds the ki in the permanent key set {K} stored in the HSS according to i, and decrypts the IMSI of the UE, and then uses preset KMme-pub and KHSS-pri to encrypt the IMSI and form the cipher text E1 (IMSI, KMme-pub, KHSS-pri). The HSS sends the cipher text E1 (IMSI, KMme-pub, KHSS-pri) to the MME. Afterward, the MME decrypts the cipher text of the IMSI of the UE according to the previously obtained MME private key and HSS public key to obtain the IMSI of the UE, where the cipher text of the IMSI comes from the HSS. The (KHSS-pub, KHSS-pri) may indicate the asymmetric key pair generated by the HSS, and the (KMme-pub, KMme-pri) may indicate the asymmetric key pair generated by the MME.

The embodiment of the present invention adopts the technical means that, the IMSI of the UE is encrypted to generate a cipher text which is transmitted to the network device, so that the problem in the current subscriber identity authentication mechanism that the IMSI of the UE is very easily resolved is overcome, and alternatively, identity authentication is performed on the network device such as MME first, so that the technical effect of transmitting the subscriber identity information confidentially is further improved.

**Embodiment 3**

Corresponding to the UE 20 and the network device 50 according to the foregoing embodiment, as shown in FIG. 9, a network device 90 is provided in this embodiment. FIG. 9 is a schematic structure diagram of the network device 90.

The network device 90 includes a third sending unit 901, a third receiving unit 902, and a third processing unit 903.

The third receiving unit 902 is configured to receive a subscriber identity response message of a UE from another network device such as MME. The subscriber identity response message of the UE includes a cipher text of the IMSI of the UE, and may be forwarded by the MME to the network device. The subscriber identity response message may further include a random number R2 and a positive integer sequence i. The random number R2 and the positive integer sequence i are used to encrypt the IMSI of the UE on the UE side, and may be further used to decrypt the IMSI of the UE on the network device side. The UE stores a permanent key set {Ki}, which is a subset of a permanent key set {K} stored in the network device 90 such as HSS, where i is a positive integer sequence.

The third processing unit 903 is configured to decrypt the cipher text of the IMSI of the UE to obtain the IMSI of the UE, where the cipher text of the IMSI is received by the third receiving unit 902. The third processing unit 903 may decrypt the cipher text of the IMSI of the UE according to the random number R2 and the positive integer sequence i received by the third receiving unit 902. When the network device 90 is an HSS, the third processing unit 903 is further configured to encrypt the IMSI of the UE by using the preset MME public key and HSS private key.

The third sending unit 901 is configured to send the cipher text of the IMSI of the UE to other network devices such as MME, where the cipher text of the IMSI of the UE is generated by the third processing unit 903 by encrypting the IMSI of the UE through the previously obtained MME public key and HSS private key. Another network device decrypts the cipher text of the IMSI of the UE to obtain the IMSI of the UE.

The network device 90 may further include a third storage unit 904, which is configured to store the previously obtained MME public key and HSS private key, and the permanent key set {K}.

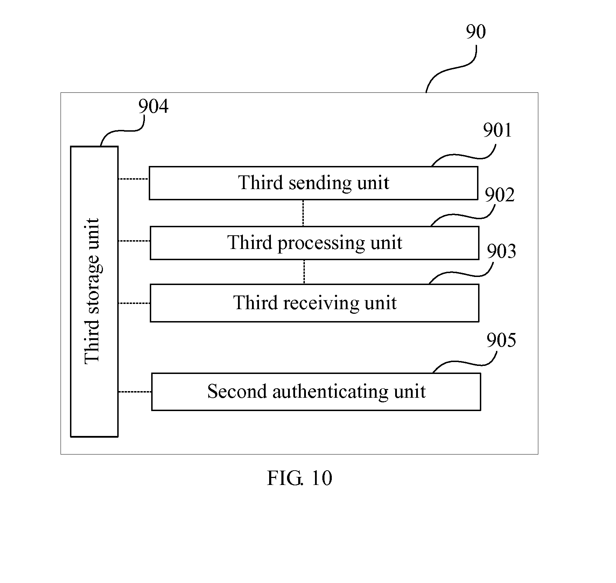

As shown in FIG. 10, based on the network device shown in FIG. 9, the network device 90 may include a second authenticating unit 905, which is configured to perform identity authentication on other devices such as MME on the network side before the third receiving unit 902 receives the subscriber identity response message forwarded by the MME.

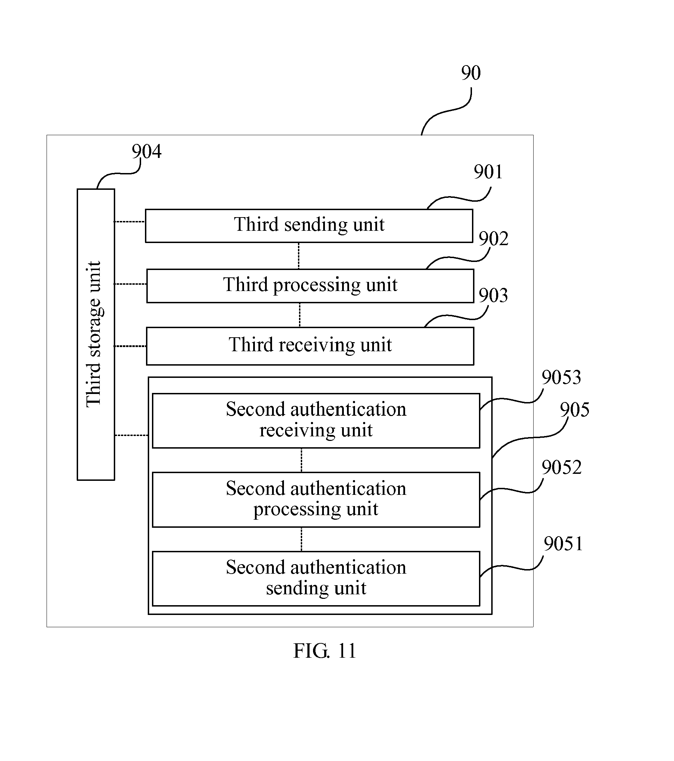

Based on the network device shown in FIG. 9 and FIG. 10, the second authenticating unit 905 may further include a second authentication sending unit 9051, a second authentication processing unit 9052, and a second authentication receiving unit 9043, as shown in FIG. 11. The second authentication processing unit 9052 is configured to generate a random number R1 and an asymmetric key pair: an HSS public key and an HSS private key. The HSS public key and the HSS private key may be stored in the third storage unit 904.

The second authentication sending unit 9051 is configured to send an authentication request message to other network devices such as MME. The authentication request message includes the HSS public key and the random number R1 which are generated by the second authentication processing unit 9052.

The second authentication receiving unit 9053 is configured to receive the cipher text of the MMEI and the MME public key fed back by another network device such as MME. The MME public key received by the second authentication receiving unit 9053 may be stored in the third storage unit 904. When the network device is an MME, the MME generates a cipher text of the MMEI by using the HSS public key, the random number R1, and the MMEI of the MME, and sends the cipher text of the MMEI and the MME public key to the second authentication receiving unit 9053.

The second authentication processing unit 9052 is further configured to: obtain the MMEI (for example, decrypt the cipher text of the MMEI by using the HSS public key and the random number R1) according to the MMEI cipher text received by the second authentication receiving unit 9053; compare the MMEI with the MMEI stored in the HSS to verify validity of the MME; and store the MME public key if the verification is passed. The MME public key may be stored in the third storage unit 904, and the third storage unit 904 may further store an MMEI list.

The network device embodiment of the present invention adopts the technical means that, identity authentication is performed on the network device such as MME first(optionally), and then the IMSI of the UE is encrypted and transmitted, so that the problem in the current subscriber identity authentication mechanism that the IMSI of the UE is very easily resolved is overcome, and the technical effect of transmitting the subscriber identity information confidentially is further improved.

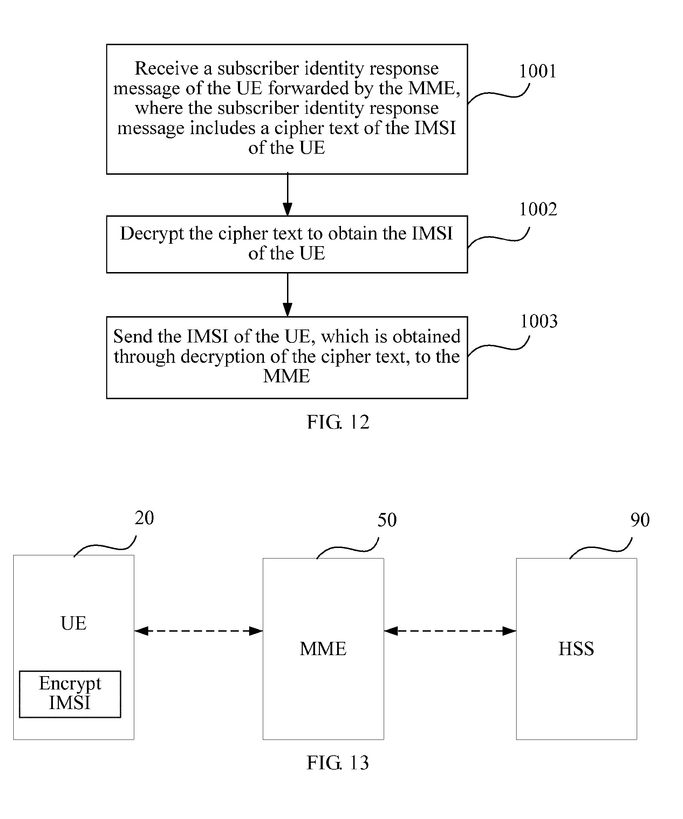

In another aspect of the embodiment of the present embodiment, by reference to the network device 90 according to the embodiment of the present embodiment, corresponding to the implementation of the network device 50 and the UE 20, a method for transmitting subscriber identity information is provided in an embodiment of the present invention. As shown in FIG. 12, the method includes the following steps:

Step 1001: Receive a subscriber identity response message of the UE forwarded by the MME, where the subscriber identity response message includes a cipher text of the IMSI of the UE.

To further improve security of transmitting the subscriber identity information, before receiving the subscriber identity response message forwarded by the network device such as MME, the MME on the network side may be authenticated, which includes the following steps. A random number R1 and an asymmetric key pair: an HSS public key and an HSS private key are generated, and an authentication request message is sent to the MME, where the authentication request message includes the HSS public key and the random number R1; after the authentication request message is sent to the MME, the MME generates a cipher text of the MMEI by using the HSS public key, the random number R1, and the MMEI of the MME, and the MME feeds back to the HSS a message that includes the MMEI cipher text and the MME public key; and the HSS obtains the MMEI (for example, decrypts the MMEI cipher text by using the HSS public key, MME public key, and random number R1) according to the MMEI cipher text, and compares the obtained MMEI with the MMEI stored in the HSS to verify validity of the MME, and if the MMEI is already stored as a valid subscriber identifier in the HSS, the verification is passed, and if the verification is passed, the MME public key is stored.

Step 1002: Decrypt the cipher text to obtain the IMSI of the UE.

The subscriber identity response message of the UE, which is forwarded by the network device such as MME, includes the cipher text of the IMSI of the UE, and the cipher text of the IMSI of the UE may be obtained by the UE through symmetric key encryption. For example, the UE obtains the corresponding permanent key ki by generating a random number R2 and randomly selecting a positive integer sequence i, and performs symmetric key encryption for the IMSI of the UE. The permanent key set {ki} stored in the UE is a subset of a permanent key set {K} stored in the HSS, where i is a positive integer sequence. The permanent key set {ki} stored in the UE may also be a subset of the permanent key set {K} stored in the MME. The received subscriber identity response message of the UE may further include the random number R2 and the positive integer sequence i for decrypting the cipher text. After the subscriber identity response message is received, the IMSI of the UE is decrypted according to the random number R2 and the permanent key ki corresponding to the positive integer sequence i.

Step 1003: Send the IMSI of the UE, which is obtained through decryption of the cipher text, to the MME.

The IMSI of the UE may be encrypted through the MME public key and the HSS private key, and sent to the MME.

The embodiment of the present invention adopts the technical means that, identity authentication is performed on the network device such as MME first (optionally), and then the IMSI of the UE is encrypted and transmitted, so that the problem in the current subscriber identity authentication mechanism that the IMSI of the UE is very easily resolved is overcome, and the technical effect of transmitting the subscriber identity information confidentially is further improved.

**Embodiment 4**

By reference to the UE 20, the network device 50, and the network device 90 according to the foregoing embodiments, FIG. 13 is a schematic diagram of a communication system for transmitting subscriber identity information according to an embodiment of the present invention. As shown in FIG. 13, the system including a UE 20, an MME 50, and an HSS 90 is taken as an example for illustration.

The UE 20 is configured to receive a subscriber identity request message from the MME 50, encrypt the IMSI of the UE 60 to generate a cipher text, and send a subscriber identity response message that includes the cipher text of the IMSI to the MME 50.

The MME 50 is configured to send a subscriber identity request message to the UE 20, and receive a subscriber identity response message from the UE 20, where the subscriber identity response message includes the cipher text of the IMSI of the UE 20. The MME 50 forwards the subscriber identity response message to the HSS 90.

The HSS 90 is configured to receive the subscriber identity response message forwarded by the MME 50 from the UE 20, where the subscriber identity response message includes a cipher text of the IMSI of the UE 20; the HSS 90 decrypts the cipher text to obtain the IMSI of the UE 20, encrypts the IMSI of the UE 20 obtained by decrypting the cipher text, and sends the encrypted IMSI to the MME 50.

Optionally, to further improve security of transmitting the subscriber identity information, before the MME 50 sends the subscriber identity request message to the UE 20, the HSS 90 may be configured to authenticate the MME 50.

The system embodiment of the present invention adopts the technical means that, the IMSI of the UE is encrypted to generate a cipher text to be fed back to the network device, so that the problem in the current subscriber identity authentication mechanism that the IMSI of the UE is very easily resolved is overcome, the problem of low confidentiality of the currently existing subscriber identity is solved; and identity authentication is performed on the HSS first, and the security of transmitting the subscriber identity is further improved.

**Embodiment 5**

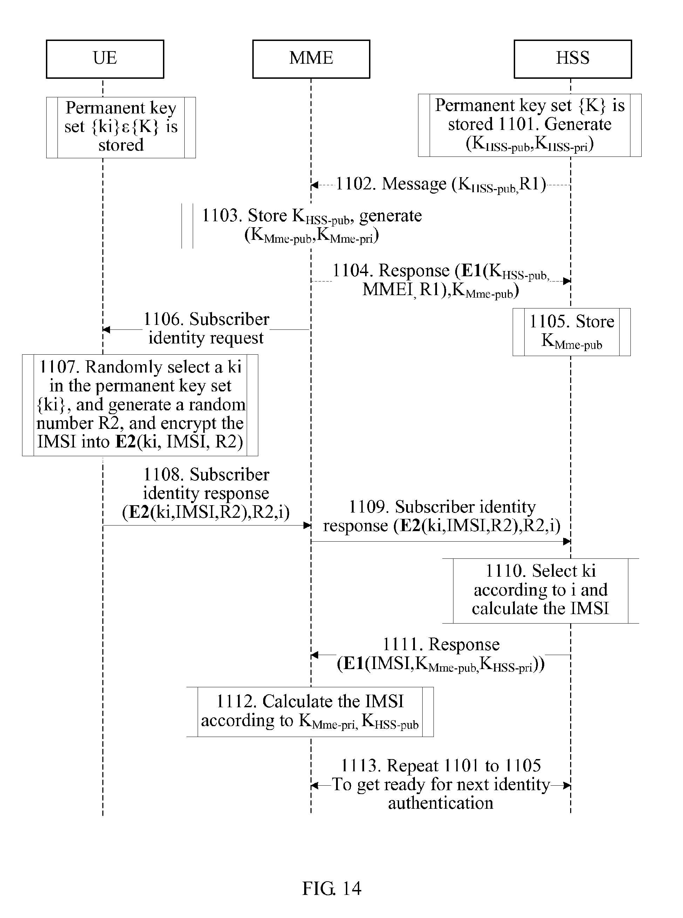

By reference to the implementation of the UE, the network device, the system embodiment, and the technical solutions according to the present invention, correspondingly, a method for transmitting subscriber identity information is provided in this embodiment, as shown in FIG. 14.

For ease of description, K represents a permanent key, $K_{pri}$ represents a private key, and $K_{pub}$ represents a public key. E1() represents a public key encryption algorithm, D1() represents a public key decryption algorithm, E2() represents a symmetric key encryption algorithm, D2() represents a symmetric decryption algorithm, C represents a cipher text, and M represents a plain text.

Using a public key $K_{pub}$ to encrypt a plain text M is expressed as:

$$E1_{Kpub}(M) = C.$$

Although the public key is different from the private key, using the corresponding private key $K_{pri}$ for decryption may be expressed as:

$$D1_{Kpri}(C) = M.$$

If the plain text M is encrypted into cipher text C through public key $K_{pub}$ and encryption algorithm E1 (), the cipher text C may be restored to M through private key $K_{pri}$ and decryption algorithm D1(). Public keys and private keys exist in pairs. If a plain text is encrypted through a public key, the cipher text needs to be decrypted through the corresponding private key. This process is applicable to authentication. Likewise, if a plain text is encrypted through a private key, the cipher text needs to be decrypted through the corresponding public key. This process is applicable to digital signature.

The operator may use an IP-based security mechanism to ensure security between the MME and HSS. To further improve security and prevent fake of the MME (namely, the MME does not pass the authentication of the HSS), the asymmetric key pair is replaced once a subscriber identity request is performed on the basis of the existing security mechanism. In this way, the previously used asymmetric key pair is different from the next used asymmetric key pair. In this embodiment, it is assumed that the HSS is valid, but the MME and the UE are vulnerable to potential threats in certain circumstances. When the MME wants to steal some relevant information about the UE, the MME fakes the valid MME, and sends an IMSI request message to the UE, which leads to adverse consequences. Examples of threats are as follows:

1. The UE is tracked according to the IMSI of the UE: This threat may be specific to a few high-end subscribers;
2. A fake subscriber accesses the service: This threat is imposed on all users/Service Providers (SPs) when no authentication is performed for the subscriber in an application-layer service.
3. A fake SP or a malicious SP provides services the subscriber does not need. This threat exists when the application-layer subscriber performs no authentication for the service. This threat is imposed on all subscribers.

In an embodiment, the permanent key K on the UE is stored in a USIM card, and the same permanent key K also exists on the HSS. The K on the USIM card may be extracted from the HSS randomly before the USIM card is delivered out of the factory, and the rest may be deduced by analogy. The permanent keys in the UE may be a set {ki}, and {ki} may be a subset of the permanent key set {K} in the HSS. The permanent key set {ki} among different UEs may repeat itself. However, because the permanent key is selected randomly, the permanent key seldom repeats itself in practice. Therefore, the load of managing and storing the permanent key set {K} on the HSS will not increase; i is greater than 0; greater value of i in the key set {ki} means greater permanent key set customized by the subscriber, and it is more likely that every key in use is different. In an application example of the present invention, the HSS needs to authenticate the identity of the MME at the time of exchanging public keys mutually. The method includes the following steps:

Step 1101: The HSS generates an asymmetric key pair ($K_{HSS\text{-}pub}$, $K_{HSS\text{-}pri}$) and a random number R1.
Step 1102: The HSS sends a message ($K_{HSS\text{-}pub}$, R1) to the MME in the form of a message.
Step 1103: After receiving the message ($K_{HSS\text{-}pub}$, R1), the MME stores the $K_{HSS\text{-}pub}$, and generates an asymmetric key pair ($K_{Mme\text{-}pub}$, $K_{Mme\text{-}pri}$); and generates an authentication code E1 ($K_{HSS\text{-}pub}$, MMEI, R1) according to the $K_{HSS\text{-}pub}$, R1, and an MMEI (unique identifier of the MME).
Step 1104: The MME sends a response (E1 ($K_{HSS\text{-}pub}$, MMEI, R1), $K_{Mme\text{-}pub}$) to the HSS.
Step 1105: The HSS judges whether the MME is valid. The MMEI is stored in the HSS, and the HSS calculates the MMEI according to the E1 ($K_{HSS\text{-}pub}$, MMEI, R1) sent by the MME, and compares the calculated MMEI with the MMEI stored in the HSS to verify validity of the MME. If the verification is passed, the HSS stores the $K_{Mme\text{-}pub}$ of the MME. By now, the HSS has stored ($K_{HSS\text{-}pub}$, $K_{HSS\text{-}pri}$, $K_{Mme\text{-}pub}$), and the MME has stored ($K_{Mme\text{-}pub}$, $K_{Mme\text{-}pri}$, $K_{HSS\text{-}pub}$).
Step 1106: When the MME needs to obtain the IMSI of the UE sometime, the MME initiates a subscriber Identity Request message to the UE.
Step 1107: After receiving the Identity Request message, the UE generates a random number R2, and randomly selects a permanent key ki corresponding to the positive integer sequence i to encrypt and protect the IMSI and obtain E2(ki, IMSI, R2).
Step 1108: The UE sends a subscriber Identity Response (E2(ki, IMSI, R2), R2, i) to the MME. Step 1109: The MME forwards the Identity Response (E2 (ki, IMSI, R2), R2, i) to the HSS. In the brackets, only part of information elements of the Identity Response message is listed.
Step 1110: After receiving the Identity Response (E2 (ki, IMSI, R2), R2, i), the HSS finds the ki in {K} according to the i, and decrypts the IMSI.
Step 1111: After obtaining the IMSI, the HSS generates a cipher text E1(IMSI, $K_{Mme\text{-}pub}$, $K_{HSS\text{-}pri}$), and sends Response(E1(IMSI, $K_{Mme\text{-}pub}$, $K_{HSS\text{-}pri}$)) to the MME.

Step 1112: The MME calculates the IMSI according to the $K_{Mme-pri}$ and $K_{HSS-pub}$.

Step 1113: Optionally, steps 1101 to 1105 are repeated, and relevant keys are negotiated for the next occasion of authenticating the subscriber identity between the HSS and the MME.

It is easy to generate an asymmetric key pair on the MME and the HSS. A generally used public key algorithm such as RSA algorithm (which is applicable to both data encryption and digital signature) in the prior art may be selected for obtaining ($K_{pub}$, $K_{pri}$). For encryption and decryption between the UE and the HSS, because a random permanent key is used for protection, the security is relatively high. When a third party attempts to fake a valid MME, the HSS authenticates the identity of the MME, which frustrates the attempt of the third party. Therefore, this mechanism has sufficient security.

The technical solution in the foregoing method embodiment of the present invention brings the following benefits:

1. Confidentiality of subscriber identity: The IMSI is encrypted through a random permanent key so that almost every key is different.

2. High security: In the foregoing mechanism, before the network device sends a subscriber identity request message to the UE, the HSS authenticates the MME first, which solves the problem that the MME may be fake. Meanwhile, the keys are exchanged mutually, and the IMSI is protected through both symmetric encryption and asymmetric encryption, which further improves security of authenticating the subscriber. On the UE side, the permanent key can be selected randomly, and therefore, almost every key is different, and the security is improved.

3. Improved marketing capability of a USIM card: The UE stores the permanent key set {ki} as required by the subscriber. {ki} is a subset of a permanent key set {K} on the HSS, in which i is greater than 0. Greater value of i in {ki} means greater permanent key set customized by the subscriber, and it is more likely that every key in use is different. Therefore, the operator can formulate the corresponding price level according to the security level of the USIM card. Through the security level of the USIM card, the subscribers have wider choice of security capabilities of the USIM card, and have higher purchasing power.

Persons of ordinary skill in the art should understand that all or part of the steps of the method specified in any embodiment above may be implemented by a program instructing relevant hardware. The program may be stored in computer readable storage media such as Read Only Memory/Random Access Memory (ROM/RAM), magnetic disk and optical disk. When the program runs, the program performs all or part of the steps described above.

Disclosed above are the objectives, technical solution and benefits of the embodiments of the present invention. Although the invention has been described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

**Claims**

1. A method for transmitting subscriber identity information, comprising:

    receiving a subscriber identity request message from a Mobility Management Entity (MME);
    encrypting an International Mobile Subscriber Identity (IMSI) of a User Equipment (UE) to generate a cipher text; and
    sending a subscriber identity response message comprising the cipher text of the IMSI to the MME.

2. The method according to claim 1, wherein:

    before receiving the subscriber identity request message from a network device, the method further comprises:

        storing a permanent key set {ki} which is a subset of a permanent key set {K} stored in a Home Subscriber Server (HSS), wherein i is a positive integer.

3. The method according to claim 1 or 2, wherein:

    the process of encrypting the IMSI of the UE to generate the cipher text comprises:

        generating a random number R2 and randomly selecting a positive integer i to obtain a corresponding permanent key ki, and encrypting the IMSI of the UE; and
        sending the subscriber identity response message comprising the cipher text of the IMSI to the MME, wherein the subscriber identity response message comprises the random number R2 and the positive integer i which are used by the network device for decrypting the cipher text.

4. A User Equipment (UE), comprising:

    a first receiving unit, configured to receive a subscriber identity request message from a Mobility Management Entity (MME);

a first processing unit, configured to encrypt an International Mobile Subscriber Identity (IMSI) of the UE to generate a cipher text of the IMSI of the UE after the first receiving unit receives the subscriber identity request message from a network device; and

a first sending unit, configured to send a subscriber identity response message to the MME, wherein the subscriber identity response message comprises the cipher text of the IMSI of the UE generated by the first processing unit.

5. The UE according to claim 4, further comprising:

a first storage unit, configured to store a permanent key set {ki} before the first receiving unit receives the subscriber identity request message from the MME, wherein the permanent key set {ki} is a subset of a permanent key set {K} stored in a Home Subscriber Server (HSS), and i is a positive integer.

6. The UE according to claim 4 or 5, wherein:

the first processing unit is further configured to generate a random number R2 and randomly select a positive integer i to obtain a corresponding permanent key ki, and perform symmetric encryption for the IMSI of the UE to generate a cipher text of the IMSI of the UE; and

the subscriber identity response message sent by the first sending unit further comprises the random number R2 and the positive integer sequence i used by the network device for decrypting the cipher text.

7. A method for transmitting subscriber identity information, comprising:

sending a subscriber identity request message to a User Equipment (UE);

receiving a subscriber identity response message from the UE, wherein the subscriber identity response message comprises a cipher text of an International Mobile Subscriber Identity (IMSI) of the UE; and

decrypting the cipher text of the IMSI of the UE to obtain the IMSI of the UE.

8. The method according to claim 7, wherein:

before sending the subscriber identity request message to the UE, the method comprises:

receiving an authentication request message from a Home Subscriber Server (HSS), wherein the authentication request message comprises an HSS public key and a random number R1; and

generating a cipher text of a Mobility Management Entity Identifier (MMEI) of a Mobility Management Entity (MME) by using the HSS public key, the random number R1, and the MMEI, and sending the cipher text of the MMEI and an MME public key to the HSS.

9. The method according to any one of claims 7 to 8, wherein:

the received cipher text of the IMSI of the UE is obtained by the UE through symmetric key encryption:

the UE generates a random number R2 and randomly selects a positive integer i to obtain a corresponding permanent key ki, and performs symmetric key encryption for the IMSI of the UE;

the permanent key set {ki} stored in the UE is a subset of the permanent key set {K} stored in the HSS; and

the received subscriber identity response message of the UE further comprises the random number R2 and the positive integer sequence i which are used by a network device for decrypting the cipher text.

10. The method according to any one of claims 7-9, wherein:

the step of decrypting the cipher text of the IMSI of the UE to obtain the IMSI of the UE comprises:

forwarding the subscriber identity response message of the UE to the HSS;

receiving the encrypted IMSI of the UE from the HSS; and

decrypting the cipher text according to the previously obtained MME private key and HSS public key to obtain the IMSI of the UE.

11. A network device, comprising:

a second sending unit, configured to send a subscriber identity request message to a User Equipment (UE);

a second receiving unit, configured to receive a subscriber identity response message from the UE, wherein the subscriber identity response message comprises a cipher text of an International Mobile Subscriber Identity (IMSI) of the UE; and

a second processing unit, configured to decrypt the cipher text of the IMSI of the UE to obtain the IMSI of the UE.

**12.** The network device according to claim 11, further comprising:

a first authenticating unit, configured to make the network device be authenticated by a Home Subscriber Server (HSS) before the second sending unit sends the subscriber identity request message to the UE.

**13.** The network device according to claim 11 or 12, wherein the first authenticating unit further comprises:

a first authentication receiving unit, configured to receive an authentication request message from the HSS, wherein the authentication request message comprises an HSS public key and a random number R1;
a first authentication processing unit, configured to store the HSS public key after the first authentication receiving unit receives the authentication request message from the HSS, wherein the first authentication processing unit further generates a Mobility Management Entity (MME) public key and an MME private key, and generates a cipher text of a Mobility Management Entity Identifier (MMEI) of an MME by using the HSS public key, the random number R1 and the MMEI; and
a first authentication sending unit, configured to send the cipher text of the MMEI and the MME public key, which are generated by the first authentication processing unit, to the HSS.

**14.** The network device according to any one of claims 11 to 13, wherein:

the cipher text of the IMSI of the UE received by the second receiving unit is obtained by the UE through symmetric key encryption:

the UE generates a random number R2 and randomly selects a positive integer i to obtain a corresponding permanent key ki, and performs symmetric key encryption for the IMSI of the UE;
a permanent key set {ki} stored in the UE is a subset of a permanent key set {K} stored in the HSS; and
the subscriber identity response message of the UE received by the second receiving unit further comprises the random number R2 and the positive integer sequence i which are used by the network device for decrypting the cipher text.

**15.** The network device according to any one of claims 11 to 14, wherein:

the second sending unit is further configured to forward the subscriber identity response message from the UE to the HSS, wherein the subscriber identity response message is received by the second receiving unit;
the second receiving unit is further configured to receive the encrypted IMSI of the UE from the HSS; and
the second processing unit is configured to decrypt the cipher text of the IMSI of the UE to obtain the IMSI of the UE, wherein the cipher text of the IMSI is received by the second receiving unit from the HSS.

**16.** A network device, comprising:

a third receiving unit, configured to receive a subscriber identity response message of a User Equipment (UE) forwarded by a Mobility Management Entity (MME), wherein the subscriber identity response message includes a cipher text of an International Mobile Subscriber Identity (IMSI) of the UE;
a third processing unit, configured to decrypt the cipher text of the IMSI of the UE received by the third receiving unit to obtain the IMSI of the UE, and encrypt the IMSI of the UE to generate a cipher text of the IMSI of the UE by using an MME public key and a Home Subscriber Server (HSS) private key which are obtained beforehand; and
a third sending unit, configured to send the cipher text of the IMSI of the UE generated by the third processing unit to the MME.

**17.** The network device according to claim 16, further comprising:

a second authenticating unit, configured to perform identity authentication on the MME before the third receiving unit receives the subscriber identity response message of the UE forwarded by the MME.

**18.** The network device according to claim 16 or 17, wherein the second authenticating unit further comprises:

a second authentication processing unit, configured to generate an HSS public key, an HSS private key, and a random number R1;
a second authentication sending unit, configured to send an authentication request message to the MME, wherein the authentication request message comprises the HSS public key and the random number R1 which are generated by the second authentication processing unit; and a second authentication receiving unit, configured to receive a cipher text of a Mobility Management Entity Identifier (MMEI) and an MME public key fed back by the MME after the second authentication sending unit sends the authentication request message to the MME, wherein the second authentication processing unit is further configured to obtain the MMEI according to the cipher text of the MMEI received by the second authentication receiving unit, and compare the obtained MMEI with an MMEI stored in the HSS to verify validity of the MME.

19. The network device according to any one of claims 16 to 18, wherein:

in the subscriber identity response message of the UE received by the third receiving unit and forwarded by the MME, the cipher text of the IMSI of the UE is obtained by the UE through symmetric key encryption:

the UE generates a random number R2 and randomly selects a positive integer i to obtain a corresponding permanent key ki, and performs symmetric key encryption for the IMSI of the UE;
a permanent key set {ki} stored in the UE is a subset of a permanent key set {K} stored in the HSS; and
the subscriber identity response message of the UE received by the third receiving unit further includes the random number R2 and the positive integer i which are used by the HSS for decrypting the cipher text.

20. A system for transmitting subscriber identity information, comprising:

the User Equipment (UE) according to any one of claims 4 to 6, and/or the network device according to any one of claims 11 to 15, and/or the network device according to any one of claims 16 to 19.

FIG. 1

101. Subscriber identity request

102. Subscriber identity response (IMSI)

FIG. 2

20

UE

First receiving unit — 201

First processing unit — 202

First sending unit — 203

FIG. 3

20

UE

204 First storage unit

First receiving unit — 201

First processing unit — 202

First sending unit — 203

FIG. 4

```
┌─────────────────────────────────────┐       401
│    Receive a subscriber identity     │      ⌒
│   request message from a network     │
│               device                 │
└─────────────────────────────────────┘
                    │
                    ▼
┌─────────────────────────────────────┐       402
│         Encrypt IMSI of the UE       │      ⌒
└─────────────────────────────────────┘
                    │
                    ▼
┌─────────────────────────────────────┐       403
│  Send a subscriber identity response │      ⌒
│ message that includes the cipher text│
│  of the IMSI of the UE to the network│
│                device                │
└─────────────────────────────────────┘
```

FIG. 5

50

FIG. 6

50

505                                                          501

Second storage unit

| Second sending unit |

502

| Second receiving unit |

503

| Second processing unit |

504

5041

| First authentication receiving unit |

5042

| First authentication processing uni |

5043

| First authentication sending unit |

FIG. 7

```
┌──────────────────────────────────────────────┐   801
│ Send a subscriber identity request message to a │
│                      UE                        │
└──────────────────────────────────────────────┘
                        │
                        ▼
┌──────────────────────────────────────────────┐   802
│      Receive a subscriber identity response    │
│   message from the UE, where the subscriber    │
│ identity response message includes a cipher text│
│            of the IMSI of the UE               │
└──────────────────────────────────────────────┘
                        │
                        ▼
┌──────────────────────────────────────────────┐   803
│ Decrypt the cipher text of the IMSI of the UE to│
│            obtain the IMSI of the UE           │
└──────────────────────────────────────────────┘
```

FIG. 8

```
                                              90

┌────────────────────────────────────────────────────┐
│   904                                                │
│ ┌──────┐                                      901    │
│ │      │      ┌──────────────────────────┐           │
│ │      │------│     Third sending unit     │          │
│ │ Third│      └──────────────────────────┘    902    │
│ │storage│     ┌──────────────────────────┐           │
│ │ unit │------│    Third processing unit   │          │
│ │      │      └──────────────────────────┘    903    │
│ │      │      ┌──────────────────────────┐           │
│ │      │------│    Third receiving unit    │          │
│ └──────┘      └──────────────────────────┘           │
└────────────────────────────────────────────────────┘
```

FIG. 9

90

904

901

Third sending unit

902

Third processing unit

903

Third receiving unit

Third storage unit

905

Second authenticating unit

FIG. 10

90

904

901

Third storage unit

| Third sending unit | 901 |

| Third processing unit | 902 |

| Third receiving unit | 903 |

Second authentication receiving unit — 9053

Second authentication processing unit — 9052

Second authentication sending unit — 9051

905

FIG. 11

```
┌─────────────────────────────────────┐
│  Receive a subscriber identity       │    1001
│  response message of the UE          │
│  forwarded by the MME, where the     │
│  subscriber identity response        │
│  message includes a cipher text of   │
│  the IMSI of the UE                  │
└─────────────────────────────────────┘
                  │
                  ▼
┌─────────────────────────────────────┐
│  Decrypt the cipher text to obtain   │    1002
│  the IMSI of the UE                  │
└─────────────────────────────────────┘
                  │
                  ▼
┌─────────────────────────────────────┐
│  Send the IMSI of the UE, which is   │    1003
│  obtained through decryption of the  │
│  cipher text, to the MME             │
└─────────────────────────────────────┘
```

FIG. 12

```
        20                    50                    90

┌──────────────┐      ┌──────────────┐      ┌──────────────┐
│              │      │              │      │              │
│     UE       │◄----►│     MME      │◄----►│     HSS      │
│              │      │              │      │              │
│ ┌──────────┐ │      │              │      │              │
│ │ Encrypt  │ │      │              │      │              │
│ │ IMSI     │ │      │              │      │              │
│ └──────────┘ │      │              │      │              │
└──────────────┘      └──────────────┘      └──────────────┘
```

FIG. 13

| UE | MME | HSS |
|---|---|---|

**UE:** Permanent key set $\{ki\}\varepsilon\{K\}$ is stored

**HSS:** Permanent key set $\{K\}$ is stored 1101. Generate $(K_{HSS-pub}, K_{HSS-pri})$

1102. Message $(K_{HSS-pub}, R1)$

1103. Store $K_{HSS-pub}$, generate $(K_{Mme-pub}, K_{Mme-pri})$

1104. Response $(\mathbf{E1}(K_{HSS-pub}, MMEI, R1), K_{Mme-pub})$

1105. Store $K_{Mme-pub}$

1106. Subscriber identity request

1107. Randomly select a ki in the permanent key set $\{ki\}$, and generate a random number R2, and encrypt the IMSI into $\mathbf{E2}(ki, IMSI, R2)$

1108. Subscriber identity response $(\mathbf{E2}(ki,IMSI,R2),R2,i)$

1109. Subscriber identity response $(\mathbf{E2}(ki,IMSI,R2),R2,i)$

1110. Select ki according to i and calculate the IMSI

1111. Response $(\mathbf{E1}(IMSI,K_{Mme-pub},K_{HSS-pri}))$

1112. Calculate the IMSI according to $K_{Mme-pri}, K_{HSS-pub}$

1113. Repeat 1101 to 1105 To get ready for next identity authentication

FIG. 14

# EP 2 613 581 A1

## INTERNATIONAL SEARCH REPORT

International application No.

PCT/CN2011/075347

**A. CLASSIFICATION OF SUBJECT MATTER**

H04W12/02 (2009.01) i

According to International Patent Classification (IPC) or to both national classification and IPC

**B. FIELDS SEARCHED**

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

CNABS,CPEA,CPRSABS,SIPOABS,DWPI,CNKI: IMSI, encrypt, MME, home, key, request, public w key

**C. DOCUMENTS CONSIDERED TO BE RELEVANT**

| Category* | Citation of document, with indication, where appropriate, of the relevant passages | Relevant to claim No. |
|---|---|---|
| X | CN101511082A (CHINA MOBILE COMM CORP) 19 Aug.2009 (19.08.2009) Claims, description page 8 line 7 – page 10 line 24 , figs. 1-9 | 1-9，11-15，20 |
| A | Ditto | 10，16-19 |
| X | CN101808313A(HUAWEI TECH CO LTD) 18 Aug. 2010 （18.08.2010） Claims, description [0046]-[0071], figs. 1-11 | 1，4 |
| A | Ditto | 2-3，5-20 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" document member of the same patent family | |

| Date of the actual completion of the international search | Date of mailing of the international search report |
|---|---|
| 29 Aug. 2011 (29.08.2011) | **08 Sep. 2011 (08.09.2011)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LI, Bing Telephone No. (86-10)62411372 |
|---|---|

Form PCT/ISA /210 (second sheet) (July 2009)

## INTERNATIONAL SEARCH REPORT
Information on patent family members

International application No.

PCT/CN2011/075347

| Patent Documents referred in the Report | Publication Date | Patent Family | Publication Date |
|---|---|---|---|
| CN101511082A | 19.08.2009 | CN101511082B | 05.01.2011 |
| CN101808313A | 18.08.2010 | None | |

Form PCT/ISA /210 (patent family annex) (July 2009)

**EP 2 613 581 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010268963